(19) Europäisches Patentamt
European Patent Office
Office européen des brevets

(11) **EP 4 102 691 A1**

(12) **EUROPEAN PATENT APPLICATION**

(43) Date of publication:
**14.12.2022 Bulletin 2022/50**

(21) Application number: **21178499.6**

(22) Date of filing: **09.06.2021**

(51) International Patent Classification (IPC):
**H02K 9/19** (2006.01)   **H02K 44/02** (2006.01)

(52) Cooperative Patent Classification (CPC):
**H02K 9/19; H02K 44/02;** H02K 1/20; H02K 3/24;
H02K 5/203; H02K 2209/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Kolondjovski, Zlatko**
**00380 Helsinki (FI)**
• **Szucs, Aron**
**00380 Helsinki (FI)**
• **Rönnberg, Kristian**
**72340 Västerås (SE)**

(74) Representative: **Kolster Oy Ab**
**Salmisaarenaukio 1**
**P.O. Box 204**
**00181 Helsinki (FI)**

(54) **ELECTRICAL MACHINE ASSEMBLY AND METHOD FOR COOLING OF ELECTRICAL MACHINE**

(57)   An electrical machine assembly and a method for cooling of an electrical machine, the electrical machine assembly comprising an electrical machine (2), a cooling system (1) and cooling agent. The electrical machine (2) comprises at least one cooling channel (21) arranged therein. The cooling system (1) is connected to the at least one cooling channel (21) of the electrical machine (2). The cooling system (1) and the at least one cooling channel (21) of the electrical machine (2) form a cooling circuit (3). There is cooling agent comprising liquid metal or liquid metal alloy within the cooling circuit (3).

Fig. 1

EP 4 102 691 A1

**Description**

FIELD

The present invention relates to an electrical machine assembly and to a method for cooling of an electrical machine.

BACKGROUND

An electrical machine may be a rotating machine comprising a rotor and a stator, such as a motor or a generator, for example. This type of electrical machine may be generally configured for conversion between mechanical energy and electrical energy. Also, transformers are an example of electrical machines.

Electrical machines may be cooled with gaseous or liquid cooling agent, such as air or water, for example. An electrical machine assembly may comprise an electrical machine, a cooling system and cooling agent, for example. In case of cooling with a liquid cooling agent, the electrical machine may for instance comprise cooling channels connected to the cooling system. A cooling circuit may be formed of the cooling channels of the electrical machine and the cooling system.

A problem associated with the above solution is that the cooling of the electrical machine may not be efficient enough. Especially, this may be the case with electrical machines having high power/volume ratios.

BRIEF DESCRIPTION

An object of the present invention is to provide a method and an apparatus for implementing the method so as to solve the above disadvantage or at least to alleviate the above disadvantage. The object of the invention is achieved by an electrical machine assembly and a method which are characterized by what is stated in the independent claims. The preferred embodiments of the invention are disclosed in the dependent claims.

The invention is based on an idea of providing an electrical machine assembly, wherein the cooling agent within the cooling circuit comprises liquid metal or liquid metal alloy.

An advantage provided by the solution of the invention is that cooling of the electrical machine is more efficient.

BRIEF DESCRIPTION OF THE DRAWINGS

In the following the invention will be described in greater detail by means of preferred embodiments with reference to the accompanying drawings, in which

Figure 1 illustrates an example of an electrical machine assembly according to an embodiment;
Figure 2 illustrates a placement of a cooling channel of an electrical machine according to an embodiment;
Figure 3 illustrates a placement of a cooling channel of an electrical machine according to an embodiment;
Figure 4 illustrates a placement of a cooling channel of an electrical machine according to an embodiment;
Figure 5 illustrates a placement of a cooling channel of an electrical machine according to an embodiment;
Figure 6 illustrates a structure of an electrical machine and a placement of a cooling channel of an electrical machine according to an embodiment;
Figure 7 illustrates a placement of cooling channels of an electrical machine according to an embodiment; and
Figure 8 illustrates a skewed cooling channel of an electrical machine according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or shape of the various elements, and generally their implementation, could vary from the examples shown in the figures.

According to an embodiment, an electrical machine assembly comprises an electrical machine, a cooling system and cooling agent. The electrical machine comprises at least one cooling channel arranged therein. The cooling system is connected to the at least one cooling channel of the electrical machine. The cooling system and the at least one cooling channel of the electrical machine form a cooling circuit. There is cooling agent within the cooling circuit. The cooling agent comprises liquid metal or liquid metal alloy. Term liquid metal (alloy) generally refers to a metal (alloy) which is liquid at or near room temperature; e.g. at temperatures below about 40 °C. Such liquid metals are for example mercury, cesium, gallium and rubidium. The melting point for mercury is -38.9 °C, for cesium 28.7 °C, for gallium 29.8 °C and for rubidium 38.9 °C.

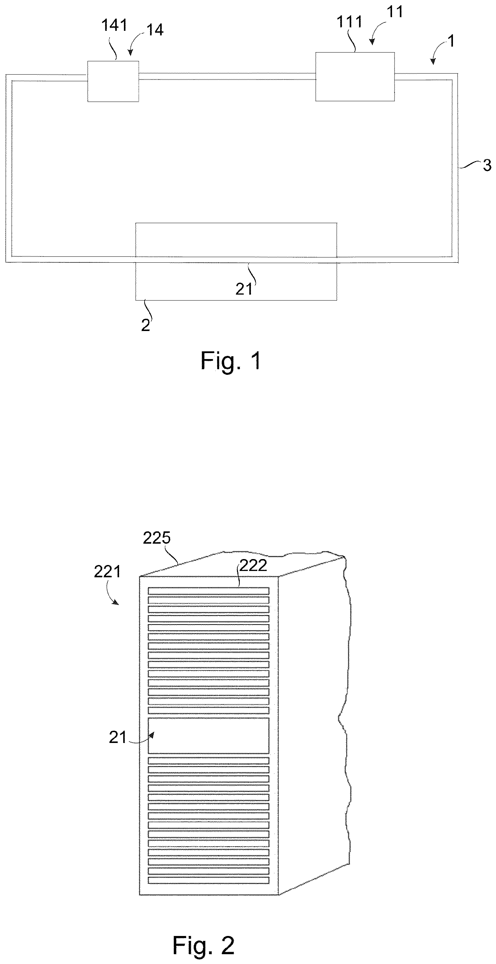

Figure 1 illustrates an example of an electrical machine assembly according to an embodiment, described as a conceptual drawing. The electrical machine assembly according to Figure 1 comprises an electrical machine 2 comprising at least one cooling channel 21 arranged therein. The electrical machine 2 may be a rotating machine such as a motor or a generator, for example.

In some alternative exemplary embodiments, the number of the electrical machines 2 in the assembly as well as their type and construction may vary. The arrangement of the at least one cooling channel 21 in the electrical machine 2 may also vary. The electrical machine 2 may comprise a plurality of cooling channels 21.

As shown in Figure 1, the cooling system 1 is connected to the cooling channel 21 of the electrical machine 2 in such a way that the cooling system 1 and the at least one cooling channel 21 of the electrical machine 2 form a cooling circuit 3. The cooling circuit 3 may be a closed circuit. In some alternative exemplary embodiments, the construction of the cooling system 1 and the cooling circuit 3 may vary.

In the electrical machine assembly, there is cooling agent within the cooling circuit 3. The cooling agent is configured to flow in a closed cycle in the cooling circuit 3. The cooling agent comprises liquid metal or liquid metal alloy.

Thermal conductivity of liquid metals may be higher compared to traditionally used cooling agents such as air and water, for instance. Consequently, the cooling agent comprising liquid metal or liquid metal alloy may have a higher cooling capacity compared to the said traditional cooling agents. Liquid metal to be used as cooling agent advantageously has good cooling properties, especially high thermal conductivity, high thermal capacity and low viscosity. The temperature range in which the liquid metal remains in a liquid state should preferably cover the operating temperature range of components of the electrical machine 2 to be cooled. This temperature range may generally be between ambient temperature and 150 °C, for example depending on the machine in question. Thus, the liquid metal used should preferably have low enough melting point and high enough boiling point. For not setting too high demands for the design of the cooling system 1, the vapor pressure of the liquid metal should preferably be low enough. The liquid metal should preferably have adequate electrical conductivity, enabling it to be pumped with an electromagnetic pump into the electrical machine 2, for example. In alternative exemplary embodiments, any type of pump that causes the cooling agent to flow in the cooling circuit 3 may be used. The technical properties of the liquid metal may further preferably support a low probability of leakage of the cooling agent. In addition, the liquid metal to be used as cooling agent may preferably be cost effective. In addition to technical preconditions, the liquid metal may preferably fulfil safety demands, e.g. as being nontoxic, non-flammable, environmentally friendly and/or having low emission of vapor, for example.

To show an example, the cooling properties of some liquid metals are listed in Table 1. Metals like potassium, sodium, indium, lithium and thin may have quite low melting points but they are above the standard ambient temperature. For example, mercury, cesium, gallium and rubidium are in a liquid state at temperatures lower or close to the standard ambient temperature of 40 °C. The cooling properties listed in Table 1 are shown for pure liquid metals. Some physical properties may be improved by using alloys of liquid metals, especially for reducing the melting point or improving the thermal conductivity, for example.

Table 1. Cooling properties of some liquid metals ([a] 25 °C; [b] 100 °C; [c] 50°C; [d] 40 °C; [e] 77°C).

| Cooling agent | Melting point [°C] | Boiling point [°C] | Evaporation pressure [mmHg] | Specific heat D/kgK] | Density [kg/m$^3$] | Thermal conductivity [W/mK] | Dynamic viscosity [Pa s] |
|---|---|---|---|---|---|---|---|
| Mercury | -38.9 | 356.7 | $1.68* 10^{-3}$ [a] | 139 [a] | 13546 [a] | 8.3 [a] | 0.00155 [a] |
| Cesium | 28.7 | 2023.8 | $10^{-6}$ [b] | 236 [b] | 1796 [b] | 17.4 [b] | 0.000334 [b] |
| Gallium | 29.8 | 2204.8 | $10^{-12}$ | 370 [c] | 5907 [c] | 29.4 [c] | 0.001369 [e] |
| Rubidium | 38.9 | 685.7 | $6*10^{-6}$ | 363 [d] | 1470 [d] | 29.3 [d] | 0.000671 [d] |

As may be seen from Table 1, mercury has the lowest melting point, but the rest of the liquid metals may also have low enough melting points to be used as cooling agents for an electrical machine, for instance. Some liquid metals may be kept at liquid state at lower temperatures than the melting points due to the undercooling point. For example, once gallium is already in a liquid state, gallium may be kept as liquid at a temperature down to about 1 °C. Gallium may remain at liquid state at normal room temperatures, for example. The boiling point of each liquid metals listed in Table 1 is higher than the boiling point of the water (100 °C), for example. This may be beneficial for direct cooling of parts of the electrical machine whose temperature may exceed the boiling point of water, for example. The liquid metal may stay as single-phase fluid, avoiding abrupt changes of pressure while flowing. The coefficient of thermal conductivity of each liquid metal listed in Table 1 is higher than that of water (0.6 W/mK), for example. Gallium has the highest coefficient of thermal conductivity of the metals listed in Table 1 which is about 50 times higher than that of water, for example. Although gallium has about 11 times lower specific heat capacity than water (4200 J/kgK), due to the higher mass density of gallium, the specific heat per unit volume of gallium is only about half of that of water, i.e. 4200 kJ/($m^3$K) for water and 2186 kJ/($m^3$K) for liquid gallium, for example. Gallium has higher specific heat than the rest of the liquid metals listed in Table 1, for instance.

Although any of the liquid metals listed on Table 1 may have superior cooling properties compared to water, the health and environmental demands may also be considered. For example, mercury may be considered as toxic. Mercury has higher vapor pressure than other liquid metals listed in Table 1, for example. Consequently, when mercury is used as a cooling agent, a leakage of mercury from the cooling system may cause serious contamination even at a room temperature, and the situation may be worse at higher temperatures, for example. Cesium and Rubidium may also have good cooling properties but belonging to the group of alkali metals, they may be chemically highly reactive with oxygen and water, for instance. Gallium may be considered as relatively nontoxic. Gallium may be safe for the human skin. Gallium may also be nonreactive with water, especially at temperatures below 100 °C. Gallium has very low vapor pressure which may be advantageous regarding safe use in a closed cooling system, for example.

According to an embodiment, liquid metal comprised in the cooling agent is gallium or gallium alloy. Gallium has high thermal conductivity, high volume specific heat, wide working temperature range and very low vapor pressure which are advantageous features for a liquid metal to be used as cooling agent for electrical machines 2. In addition, gallium is relatively nontoxic and not dangerous for the environment, thus fulfilling the environmental and health standards.

Here is presented an exemplary comparison between the cooling capabilities of liquid gallium and water.

Reynolds number, showing the degree of turbulence of a fluid, for circular channel may be calculated as follows:

$$Re = \frac{\rho v_{ax} D_c}{\mu}.$$

The degree of turbulence is defined as follows:

- Re < 2300: fully laminar flow
- 2300 < Re < 10000: transient flow, partly laminar and partly turbulent properties and
- 10000 < Re: fully turbulent flow.

Considering:

- a circular cooling channel with diameter of $D_c$=1 cm, wherein cooling agent moves with axial speed $V_{ax}$=0.1m/s,
- dynamic viscosity $\mu$ 1.369*$10^{-3}$ Pa s for gallium (at 77 °C) and 8.9* $10^{-4}$ Pa s for water (at 25 °C) and
- density $\rho$ 5907 kg/$m^3$ for gallium (at 50 °C) and 1000 kg/$m^3$ for water,

the Reynolds number is Reig = 4315 for liquid gallium flow and $Re_w$ = 1124 for water flow. The liquid gallium flow belongs to the transient region and the water flow belongs to the laminar region according to the above identified criteria.

A laminar water flow in a circular tube characterized by uniform surface heat flux and fully developed conditions has a constant Nusselt number $Nu_w$ = 4.36.

Prandtl number is $Pr_{lg}$ = 0.025 for liquid gallium and $Pr_w$ = 7.56 for water.

The Nusselt number for liquid metals is calculated as follows:

$$Nu = 4.82 + 0.0185(Re \cdot Pr)^{0.827}$$

For liquid gallium flow Nusselt number is $Nu_{lg}$ = 5.71.

Coefficient of thermal convection is calculated as follows:

$$h = \frac{Nu*k}{D_c},$$

wherein k is the coefficient of thermal conduction which is $k_{lg}$ = 29.4 W/mK (at 40 °C) for gallium and $k_w$ = 0.6 W/mK for water.

Coefficient of thermal convection is $h_{lg}$ = 16 787 W/m$^2$K for liquid gallium and $h_w$ = 262 W/m$^2$K for water.

As may be seen, considering the same conditions for cooling, the liquid gallium flow may achieve up to 64 times higher coefficient of convection than the water flow, for example. Cooling properties of gallium seem superior compared to water, for instance.

Using liquid gallium in convective cooling of an electrical machine 2 may provide a drastic enhancement in cooling efficiency. Improving cooling efficiency also enables to increase the nominal power and/or reduce dimensions of the electrical machine 2. The electrical machine 2 cooled by liquid metal may have a better power/volume ratio in comparison with a traditional electrical machine 2 cooled by air or water.

Liquid gallium may possess somewhat better properties for a cooling agent compared to some other liquid metals, for example. In some alternative exemplary embodiments, the liquid metal that may be used as a cooling agent may be mercury, cesium, gallium or rubidium, for example, or an alloy of any one of them or a combination of two or more of them. The liquid metal alloy may comprise copper in addition to gallium, for example.

Inside the electrical machine, the high or medium frequency magnetic fields may cause electromagnetic losses in cooling agent comprising liquid metal of liquid metal alloy as the cooling agent is electrically conductive.

According to an embodiment, the cooling agent comprises particles of at least one electrically insulating material. The particles of at least one insulating material may be of micro or nano size, for example.

According to an embodiment, the at least one insulating material comprises diamond, silicon and/or ceramics. Adding small particles of insulating material such as silicon and/or ceramics to the cooling agent comprising liquid metal or liquid metal alloy may enable to reduce electromagnetic losses in the cooling agent inside the electrical machine 2. This is beneficial as far as the overall thermal conductivity of the cooling agent may not be compromised. The most preferable option may be to use diamond particles. Since diamond may be considered as both an excellent thermal conductor and an electrical insulator, adding diamond particles to the cooling agent may reduce electrical conductivity and improve thermal conductivity of the liquid metal at the same time. In other words, the electromagnetic losses of the cooling agent may be limited and the overall cooling effect of the cooling agent may be improved at the same time.

According to an embodiment shown in Figure 1, the cooling system 1 comprises cooling means 11 configured to cool the cooling agent. According to an embodiment, the cooling means 11 comprise a heat exchanger 111 configured to dissipate heat from the cooling agent to the ambient.

According to an embodiment shown in Figure 1, the cooling system 1 comprises pumping means 14 configured to cause the cooling agent to flow in the cooling circuit 3. According to an embodiment, the pumping means 14 comprise at least one electromagnetic pump or magnetohydrodynamic pump 141. Liquid gallium and other liquid metals have relatively good electrical conductivity that enables the usage of a magnetohydrodynamic pump 141 for driving the liquid metal in the cooling circuit 3 of the electrical machine assembly. Using a magnetohydrodynamic pump 141 is beneficial especially due to high efficiency, low energy consumption, silent and vibration-free operation and usage of non-moving parts only.

In alternative exemplary embodiments, the pumping means 14 comprise a peristaltic pump and/or electro-wetting pump. In alternative exemplary embodiments, the pumping means 14 comprise a traditional pump for example when the electrical conductivity of the cooling agent is not high enough for using a magnetohydrodynamic pump 141.

According to an embodiment, the cooling channels 21 may be arranged in thermally critical parts of the electrical machine 2 unlike in traditionally cooled electrical machines 2 in which the cooling channels 21 are typically arranged on the outer surface of the electrical machine 2 as a so called water jacket, for example. According to an embodiment, the cooling channels 21 of the electrical machine 2 may be arranged to cool very hot parts of the electrical machine 2 such as near the windings. Temperature at this kind of very hot parts of the electrical machine 2 may exceed the boiling point of water but not the boiling point of liquid metal or liquid metal alloy.

Compared to traditional cooling channels 21 used for example with air cooling of an electrical machines 2, the cooling channels 21 according to an embodiment may be of lower volume due to the superior cooling properties of liquid metal. In other words, extracting heat from highly confined space of the electrical machine 2 is more effective using liquid metal or liquid metal alloy as cooling agent.

The electromagnetic losses that may be generated in the liquid metal inside the electrical machine 2 may be avoided or limited by a proper choice of the location of cooling channels 21 of the electrical machine 2. The positioning of the cooling channels 21 may be selected so as to avoid high-leakage flux penetrating the cooling agent comprising liquid metal or liquid metal alloy, for example.

In some exemplary embodiments, the cooling channels 21 of the electrical machine 2 may be placed to traditionally used places.

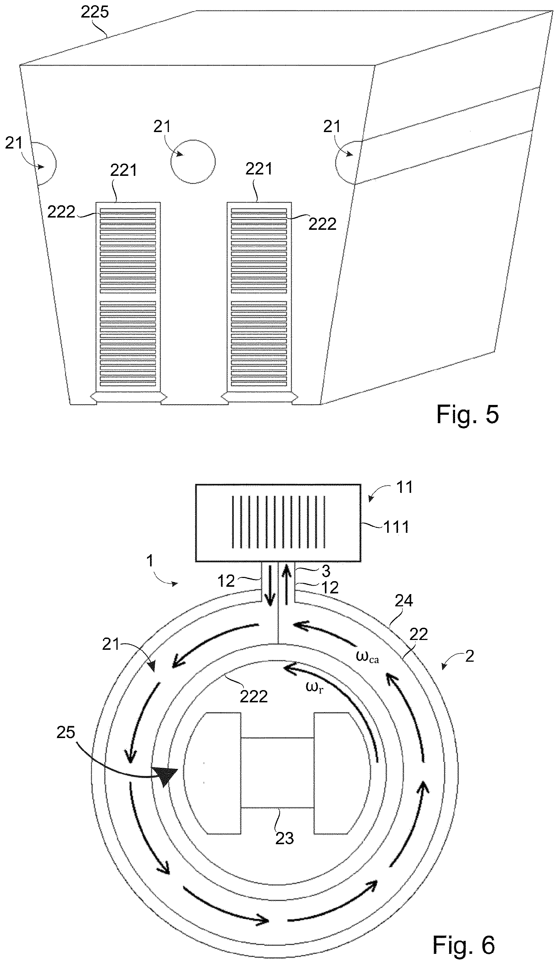

According to an embodiment as illustrated in Figure 6, the electrical machine 2 is a rotating machine comprising a frame 24, a rotor 23 and a stator 22 situated inside the frame 24 and surrounding the rotor 23. The rotor 23 is configured to rotate in relation to the stator 22. There is an airgap 25 between the rotor 23 and the stator 22.

According to an embodiment, the at least one cooling channel 21 of the electrical machine 2 is situated at least partially in the stator 22 and/or in the frame 24. Figures 2 - 6 illustrate exemplary embodiments of possible placements of cooling channels 21 in the stator 22. In some alternative exemplary embodiments, the electrical machine 2 comprises a plurality of cooling channels 21, the placement of which may combine the embodiments illustrated in the Figures or differ from them. Also, the shape of cooling channels 21 may differ from what is presented in the Figures. For instance, there may be a plurality of cooling channels 21 in the frame 24 (not shown in Figures).

According to an embodiment, the electrical machine 2 comprises a plurality of cooling channels 21, and the stator 22 of the electrical machine 2 comprises a core part 225 having a plurality of stator slots 221 formed therein, and at least one winding layer 222 arranged in each stator slot 221.

According to an embodiment, each stator slot 221 and/or the core part 225 has at least one cooling channel 21 at least partly situated therein. Thus, each of the stator slots 221 may have one or more dedicated cooling channels 21 located to pass through the respective stator slot 221. It is also possible that one cooling channel 21 passes through two or more different stator slots 221, for instance. The core part 225 of the stator 22 surrounds the rotor 23 in such a way that the stator slots 221 are formed as notches on the inner yoke of the stator 22, in other words on the inner perimeter of the cylindrical stator 22 yoke, closest to the rotor 23. The amount and shape of the stator slots 221 may vary according to the type of the electrical machine 2. Each stator slot 221 has a length direction parallel to the axial direction of the rotor 23 and a height direction parallel to radial direction of the rotor 23.

The embodiments of Figures 2 - 4 illustrate different options of how to place a cooling channel 21 into a stator slot 221, describing only one stator slot 221 of the plurality of the stator slots 221 of the electrical machine 2. As the at least one winding layer 222, including its insulation, may be the most thermally critical part of the electrical machine 2, a very effective way to cool it may be placing the cooling channels 21, or at least some of them, directly inside the stator slots 221. The cooling agent is configured to flow in each cooling channel 21 at least principally in a direction parallel to the axial direction of the rotor 23, in other words in a direction parallel to the length direction of the stator slots 221.

According to an embodiment, the stator 22 comprises at least two winding layers 222, and the at least one cooling channel 21 of the electrical machine 2 is situated between the winding layers 222. In Figure 2 is shown an embodiment in which the stator 22 comprises a plurality of winding layers 222 arranged in the stator slot 221 wherein the cooling channel 21 is situated between the winding layers 222 in each stator slot 221. The cooling channel 21 may be placed e.g. approximately in the middle of the stator slot 221 in its height direction as illustrated in the example. The magnetic leakage flux of the electrical machine 2 is considered mainly perpendicular to the height direction of the stator slot 221 in the middle of the stator slot 221 wherein the cooling channel 21 is situated. The cross-section of the cooling channel 21 is of rectangular shape. Also, the cross-section of the stator slot 221 is substantially rectangular in shape. This shape of the stator slot 221 may be typical in high-voltage electrical machines 2. This embodiment may suit for a high voltage electrical machine 2, for example.

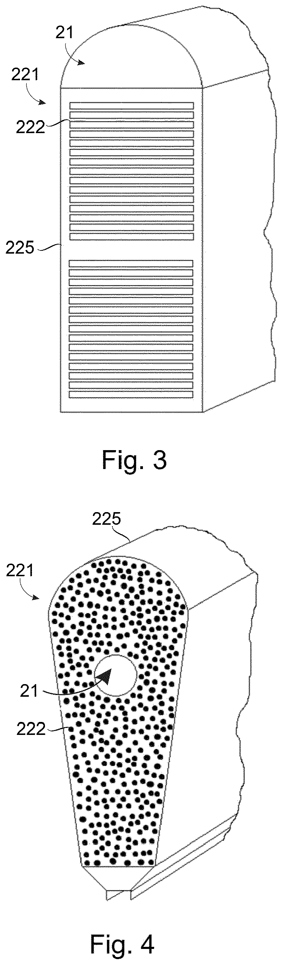

According to an embodiment, the at least one cooling channel 21 of the electrical machine 2 is situated in an edge of each stator slot 221 or in a bottom of each stator slot 221. In Figure 3 is shown an embodiment in which there are a plurality of winding layers 222 in each stator slot 221. The cooling channel 21 is situated in the bottom of the stator slot 221, the bottom of the stator slot 221 being on the inner yoke of the stator 22 and furthest from the airgap 25 between the rotor 23 and the stator 22, in such a way as to cool directly the last winding layer 222 and core part 225 at the same time. The magnetic leakage flux of the electrical machine 2 is considered mainly parallel to the height direction of the stator slot 221 at the bottom of the stator slot 221 wherein the cooling channel 21 is situated. The cross-section of the cooling channel 21 has a semi-circular shape. This embodiment may suit for a high voltage electrical machine 2, for example. This embodiment may suit also in case the stator 22 comprises only one winding layer 222.

In Figure 4 is shown an embodiment in which the cooling channel 21 of the electrical machine 2 is situated in the middle of each stator slot 221 in such a way as to be totally surrounded by the winding layers 222 or winding wires. The cross-section of the cooling channel 21 has circular shape. The magnetic leakage flux of the electrical machine 2 is considered mainly perpendicular to the height direction of the stator slot 221 in the middle of the stator slot 221 wherein the cooling channel 21 is situated. This embodiment may suit for a low voltage electrical machine 2, for example.

In the embodiment shown in Figure 5, the cooling channel 21 is situated in the core part 225 of the stator 22 in such a way as to be in direct contact only to the core part 225. The cooling agent is configured to flow in the cooling channel 21 parallel to the axial direction of the rotor 23. The cross-section of the cooling channel 21 has circular shape. In alternative exemplary embodiments, the placement and shape of the cooling channel 21 in the core part 225 of the stator 2 may differ from what is presented in Figure 5.

Figure 6 illustrates an exemplary structure of an electrical machine 2 and a possible placement of a cooling channel 21 of an electrical machine 2 according to an embodiment. According to an embodiment, the cooling system 1 may comprise at least one connecting channel 12, comprising e.g. a suitable pipe or tube, configured to be connected to the at least one cooling channel 21 of the electrical machine 2. As shown in the exemplary embodiment in Figure 6, the connecting channels 12 may be configured to lead the cooling agent into and out of the electrical machine 2. Different kind of structure for the arrangement of the connecting channels 12 may be used depending on e.g. which part of the electrical machine 2 the at least one cooling channel 21 is arranged to. The cooling system 1, e.g. the possible connecting channels 12 thereof, may be connected to the cooling channel(s) 21 of the electrical machine 2 by suitable connecting means (not shown in the figures), such as pipe or tube connectors, for example.

According to an embodiment shown in Figure 6, the cooling channel 21 is situated between the frame 24 and the stator 22 in such a way as to surround the stator 22. The cooling channel 21 is formed between two cylinders having different radius in the radial direction of the stator 22 so as to allow the cooling agent to flow in the cooling channel 21 in circumferential direction of the stator 22. In other words, the cooling agent is confined only in the region of the stator 22 yoke so that it may not leak towards the airgap 25 of the electrical machine 2. This type of cooling channel 21 is defined as a radial cooling channel 21 in this application. When the cooling agent flows circumferentially, the cooling agent may take heat from the stator 22 yoke and the upper part of the winding layers 222 and dissipate the heat in the heat exchanger 111. This embodiment may suit for a high voltage electrical machine 2 having a high power, for example. In alternative exemplary embodiments, the placement and size of the radial cooling channel 21 in the stator 2 may differ from what is presented in Figure 6.

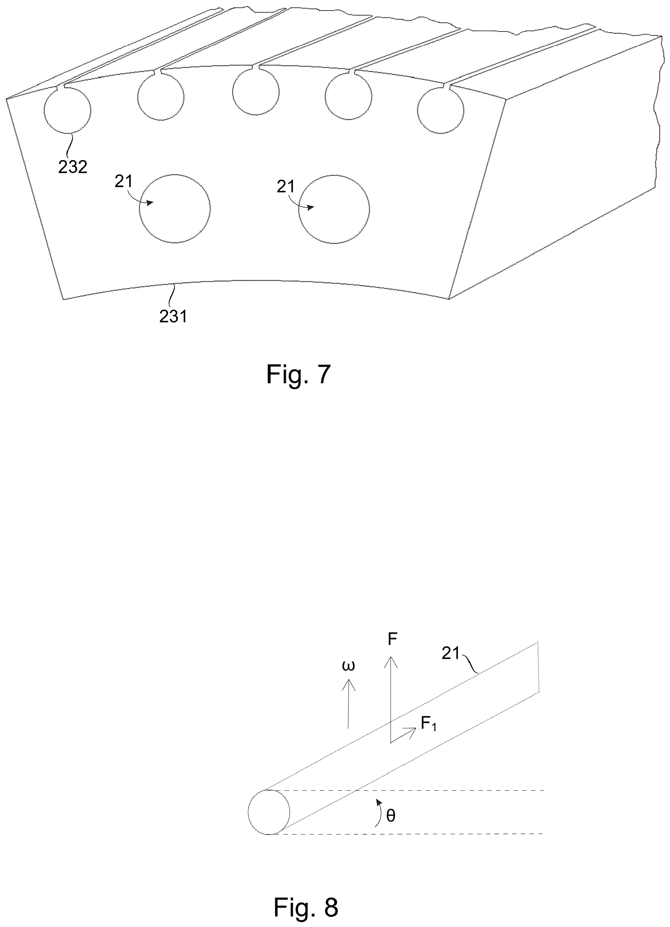

According to an embodiment, the at least one cooling channel 21 of the electrical machine 2 is situated at least partially in the rotor 23. The rotor 23 comprises a rotor shaft and rotor core 231 having a plurality of rotor slots 232 formed therein, and a plurality of rotor bars comprising rotor windings. Each rotor bar is arranged into a corresponding rotor slot 232. The rotor slots 232 are formed as notches on the outer yoke of the rotor 23 in parallel to the axial direction of the rotor shaft. In Figure 7 is illustrated a sector of a rotor core 231 having rotor slots 232 formed therein. There are cooling channels 21 situated in rotor core 231 in parallel to the direction of the rotor slots 232. In alternative exemplary embodiments, the placement of the cooling channels 21 in the rotor 23 differ from what is presented in Figure 7.

According to an embodiment, a method for cooling of an electrical machine 2 comprising at least one cooling channel 21 connected to a cooling system 1, comprises providing a flow of cooling agent through the at least one cooling channel 21 of the electrical machine 2 and the cooling system 1, and cooling the cooling agent in the cooling system 1. The cooling agent comprises liquid metal or liquid metal alloy. The method described herein is applicable to all embodiments described herein related different kinds of electrical machine assemblies.

According to an embodiment, providing the flow of cooling agent is performed by means of the cooling system 1. The cooling system 1 may comprise pumping means 14. According to an embodiment, the pumping means 14 cause the cooling agent to flow in a cooling circuit 3 formed of the cooling system 1 and the at least one cooling channel 21. According to an embodiment, the pumping means 14 comprise at least one magnetohydrodynamic pump 141. According to an embodiment, the flow of cooling agent is provided by means of magnetohydrodynamic drive without the use of pumping means 14 as explained later on in this application, or the magnetohydrodynamic drive is exploited in addition to using pumping means 14 for causing the cooling agent to flow.

According to an embodiment, the cooling agent is cooled in the cooling system 1 by cooling means 11. According to an embodiment, the cooling means 11 comprise a heat exchanger 111.

According to an embodiment, the liquid metal is gallium. According to an embodiment, the liquid metal is mercury, cesium, gallium or rubidium.

An example of an embodiment of the method for cooling of an electrical machine 2 is shown in Figure 1 wherein a flow of cooling agent comprising liquid metal or liquid metal alloy is provided through the cooling channel 21 of the electrical machine 2 by means of a magnetohydrodynamic pump 141. The cooling system 1 is connected to the cooling channel 21 of the electrical machine 2. The cooling agent is cooled in the cooling system 1 by means of a heat exchanger 111.

According to an embodiment, the electrical machine 2 is configured to operate as a magnetohydrodynamic pump 141, thereby moving by means of magnetohydrodynamic drive the electrically conductive cooling agent comprising liquid metal or liquid metal alloy through the at least one cooling channel 21 of the electrical machine 2. The said magnetohydrodynamic drive is configured to be created as the leakage flux of the electrical machine 2 induces currents in the cooling agent in the cooling channel 21. Magnetohydrodynamic drive involves the propulsion of the cooling agent by the Ampere force, resulting from the vector product of an electric current in the cooling agent with a perpendicular magnetic field. In other words, the electric machine acts as magnetohydrodynamic drive and takes the role of a magnetohydrodynamic pump 141.

As the electrical machine 2 utilizes its own electromagnetic field in order to drive the cooling agent without using external power sources such as pumps or blowers, additional energy losses and/or power consumption of external power sources may be avoided. The energy spent for the magnetohydrodynamic propulsion of the cooling agent is supplied by the electrical machine 2 itself and may be considered as an electromagnetic loss. The electromagnetic leakage flux, typically considered as unwanted in electrical machines 2, may be taken into use in this embodiment. The total space, weight and cost of the electrical machine assembly may be reduced. For example, avoiding the need for a blower attached to a rotor shaft may reduce the length and the total mass of the rotor shaft, thereby resulting in better rotor-dynamic behaviour. Noise and vibrations caused by pumps and blowers may be avoided.

A high power/volume ratio of the electrical machine 2 achieved due to the use of cooling agent comprising liquid metal combined with an ability to operate without any pumps or blowers may make the electrical machine 2 more compact in size and thus attractive especially for applications for limited spaces, such as for electric cars or for other applications related to transportation.

In the embodiments explained above related to Figures 2 - 5, a direct current may be created in the cooling agent by means of a pair of electrodes set on opposite sides of the cooling channel 21 of the electrical machine 2 as voltage is applied between the electrodes. A magnetic field is generated by the electrical machine 2, being a part of the same magnetic field that magnetizes the magnetic circuit of the electrical machine 2. The Ampere force acts on the cooling agent in the direction of the cooling channel 21. Due to the force applied, the cooling agent is accelerated along the cooling channel 21 to a certain speed and a forced cooling in the cooling channel 21 is created. This kind of magnetohydrodynamic drive is of conduction type. As the cooling channel 21 is of an axial type, the cooling agent is configured to flow in the axial direction of the rotor 23. The cooling channel 21 has then a double role: one for cooling and the other one for driving the cooling agent within the cooling circuit 3. The driving force created in the cooling channel 21 of the electrical machine 2 moves the cooling agent towards the cooling means 11, such as a heat exchanger 111, where the cooling agent is cooled and the cooling agent is recirculated again into the electrical machine 2.

Magnetohydrodynamic drive may be exploited in the cooling channels 21 of the electrical machine 2 where there is a presence of a magnetic field. In this regard, the cooling channels 21 may be placed nearly in any part of the electrical machine 2, most preferably close to the at least one winding layer 222 of the stator 22, into the stator slots 221 as presented especially in Figures 2 - 4, wherein the magnetic field used in generation of the magnetohydrodynamic drive is the magnetic leakage flux in each stator slot 221. The direction of the magnetic leakage flux is explained earlier in this application in relation to each embodiment. As to Figure 5, the magnetic field used in generation of the magnetohydrodynamic drive is the magnetic leakage flux in the cooling channel 21.

The vector product of the current and the magnetic field should result in a force only in one direction in order to create a constant movement of the flow in one direction. Consequently, an eventual change in the direction of the magnetic field should be followed by a change in the direction of the electrical current. Conduction type of magnetohydrodynamic drive may be therefore most suitable in parts of the electrical machine 2 that have a constant and unidirectional magnetic field such as a stator 22 of a direct current electrical machine and a rotor 23 of a synchronous machine. In order to utilize the effect of conduction type of magnetohydrodynamic drive in parts of the electrical machines 2 with alternating magnetic field, the direction of the current should be synchronized with the direction of the magnetic field by using electronic components.

In induction type of magnetohydrodynamic drive the alternating currents are induced by a varying magnetic field, as eddy currents. In the embodiment explained above related to Figure 6, as the rotor 23 of the electrical machine 2 rotates at angular speed $\omega_r$ and there is a rotational magnetic field in the stator 22, some part of the magnetic flux penetrates as a leakage flux into the radial cooling channel 21 inducing currents in the cooling agent and, as a result, creates a moment that moves the cooling agent with angular speed $\omega_{ca}$. The moment that accelerates the cooling agent acts on the whole circumference of the stator 22, and the whole cooling channel 21 acts as an induction magnetohydrodynamic pump 141. Electrodes and/or auxiliary electronic components are not required for synchronization of the direction of the electrical current of the cooling agent with the direction of the magnetic field. Consequently, this type of magnetohydrodynamic drive is more convenient in electrical machines 2 of alternating current.

According to an embodiment, the induction type of magnetohydrodynamic drive may also be used in association with the embodiment explained above related to Figure 5, for example, by skewing the cooling channel 21 of the electrical machine 2 by a certain angle $\theta$ in such a way that the direction of the cooling channel 21 differs from the axial direction of the rotor 23 by that angle $\theta$. An example of a skewed cooling channel 21 is shown in Figure 8. In case of having a rotating magnetic field with angular velocity $\omega$, due to the effect of induction, a force F acts on the electrically conductive cooling agent in the cooling channel 21. As the cooling channel 21 is skewed, a force component $F_1 = F * \sin \theta$ moves the cooling agent along the cooling channel 21. The higher the angle $\theta$ of skewing, the higher the force component $F_1$ acting on the cooling agent. One way to make the effect of skewing on the stator core may be by punching the opening for the cooling channels 21 on each lamination of the stator with a small angular step for each following lamination, in case the stator comprises a plurality of laminations, for example. Due to the skewed cooling channels 2, the current is created in the cooling agent without the use of electrodes.

It will be obvious to a person skilled in the art that the inventive concept can be implemented in various ways. The invention and its embodiments are not limited to the examples described above but may vary within the scope of the claims.

**Claims**

1. An electrical machine assembly, comprising:

   an electrical machine (2) comprising at least one cooling channel (21) arranged therein;
   a cooling system (1) connected to the at least one cooling channel (21) of the electrical machine (2), wherein the cooling system (1) and the at least one cooling channel (21) of the electrical machine (2) form a cooling circuit (3); and
cooling agent within the cooling circuit (3), wherein the cooling agent comprises liquid metal or liquid metal alloy.

2. An electrical machine assembly according to claim 1, wherein the liquid metal is gallium.

3. An electrical machine assembly according to claim 1 or 2, wherein the cooling agent comprises particles of at least one electrically insulating material.

4. An electrical machine assembly according claim 3, wherein the at least one electrically insulating material comprises diamond, silicon and/or ceramics.

5. An electrical machine assembly according to any one of the previous claims, wherein the cooling circuit (3) is a closed circuit.

6. An electrical machine assembly according to any one of the previous claims, wherein the cooling system (1) comprises cooling means (11) configured to cool the cooling agent.

7. An electrical machine assembly according to any one of the previous claims, wherein the electrical machine (2) is a rotating machine comprising:

   a frame (24);
   a rotor (23); and
   a stator (22) situated inside the frame (24) and surrounding the rotor (23).

8. An electrical machine assembly according to claim 7, wherein the at least one cooling channel (21) of the electrical machine (2) is situated at least partly in the stator (22) and/or in the frame (24).

9. An electrical machine assembly according to claim 7 or claim 8, wherein the at least one cooling channel (21) of the electrical machine (2) is situated at least partly in the rotor (23).

10. An electrical machine assembly according to any one of claims 7 - 9, wherein the electrical machine (2) comprises a plurality of cooling channels (21), and the stator (22) of the electrical machine (2) comprises a core part (225) having a plurality of stator slots (221) formed therein, and at least one winding layer (222) arranged in each stator slot (221), and wherein each stator slot (221) and/or the core part (225) has at least one cooling channel (21) at least partly situated therein.

11. An electrical machine assembly according to claim 10, wherein the at least one cooling channel (21) of the electrical machine (2) is situated in the edge of each stator slot (221) or in the bottom of each stator slot (221).

12. An electrical machine assembly according to claim 10 or claim 11, wherein the stator (22) comprises at least two winding layers (222), and the at least one cooling channel (21) of the electrical machine (2) is situated between the winding layers (222).

13. An electrical machine assembly according any one of the previous claims, wherein the electrical machine (2) is configured to operate as a magnetohydrodynamic pump.

14. An electrical machine assembly according any one of the previous claims, wherein the cooling system (1) comprises pumping means (14) configured to cause the cooling agent to flow in the cooling circuit (3).

15. A method for cooling of an electrical machine (2), the electrical machine (2) comprising at least one cooling channel (21) connected to a cooling system (1), the method comprising:

   providing a flow of cooling agent through the at least one cooling channel (21) of the electrical machine (2) and the cooling system (1), wherein the cooling agent comprises liquid metal or liquid metal alloy; and
   cooling the cooling agent in the cooling system (1).

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 21 17 8499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/013759 A1 (TORREY DAVID ALLAN [US] ET AL) 14 January 2021 (2021-01-14) | 1,5-8, 10-12, 14,15 | INV. H02K9/19 H02K44/02 |
| A | * paragraphs [0009], [0029] - paragraphs [0045], [0065]; figures 2,3,5,8,9 * | 3,4 | |
| X | CN 108 462 321 A (YUNNAN JINGCHUANG LIQUID METAL THERMAL CONTROL TECH R&D CO LTD) 28 August 2018 (2018-08-28) * abstract; figures 1,2 * | 1,2,6, 14,15 | |
| X | US 4 607 181 A (SMITH MARTIN K [US]) 19 August 1986 (1986-08-19) * column 3, line 19 - column 4, line 30; figure 1 * | 1,2,9,15 | |
| X | RU 198 799 U1 (NN) 29 July 2020 (2020-07-29) * paragraph [0081] - paragraph [0084]; figures 1-3 * | 1,13,15 | |

TECHNICAL FIELDS
SEARCHED      (IPC)

H02K

The present search report has been drawn up for all claims

| Place of search | Date of completion of the search | Examiner |
|---|---|---|
| Munich | 25 November 2021 | Sedlmeyer, Rafael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 8499

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | | Publication date | Patent family member(s) | Publication date |
|---|---|---|---|---|
| US 2021013759 | A1 | 14-01-2021 | NONE | |
| CN 108462321 | A | 28-08-2018 | NONE | |
| US 4607181 | A | 19-08-1986 | NONE | |
| RU 198799 | U1 | 29-07-2020 | NONE | |

EPO FORM P0459

For more details about this annex : see Official Journal of the European Patent Office, No. 12/82